# EUROPÄISCHE PATENTSCHRIFT

(11) **EP 2 487 058 B1**
(45) Veröffentlichungstag und Bekanntmachung des Hinweises auf die Patenterteilung: **20.11.2013**
(21) Anmeldenummer: 11001193.9
(22) Anmeldetag: 14.02.2011
(51) Int. Cl.: B60J 7/04

(54) **Deckel für ein Schiebedachsystem**
Cover for a sliding roof system
Couvercle pour un système de toit coulissant

(43) Veröffentlichungstag der Anmeldung: 15.08.2012
(73) Patentinhaber: Roof Systems Germany GmbH, 63128 Dietzenbach (DE); Daimler AG, 70327 Stuttgart (DE)
(72) Erfinder: Grimm, Rainer, 60598 Frankfurt (DE); Riess, Claudia, 64405 Lichtenberg (DE); Boehm, Horst, 60599 Frankfurt (DE); Schrader, Jürgen, 71093 Weil im Schönbuch (DE)
(74) Vertreter: Prinz & Partner

(56) Entgegenhaltungen:
- EP-A1- 0 437 283
- EP-A1- 1 533 159
- EP-A2- 1 238 841
- DE-A1-102006 027 877
- DE-B3- 10 326 433
- DE-C1- 4 108 195
- JP-A- 61 160 319
- NL-A- 6 814 715

## Beschreibung

Die Erfindung betrifft einen Deckel für ein Schiebedachsystem.

Schiebedachsysteme für Kraftfahrzeuge sind allgemein bekannt. Sie enthalten mindestens einen Deckel, der im geschlossenen Zustand eine Öffnung im Fahrzeugdach verschließt. Üblicherweise ist ein Ausstellmechanismus vorhanden, mit dem der Deckel aus der geschlossenen Stellung in eine mehr oder weniger geöffnete Stellung verschoben werden kann.

Ein Beispiel für einen Deckel eines solchen Schiebedachsystems findet sich in der DE 102 13 994 A1. Am Deckel ist ein Kulissenteil 25 angebracht, das in einem Gleiter verschiebbar ist, der Teil des Ausstellmechanismus ist. Das Kulissenteil ist im Querschnitt Z-förmig, wobei ein Schenkel des Kulissenteils an den Deckel angeschäumt ist.

Der Nachteil des bekannten Deckels besteht darin, dass das Kulissenteil aufgrund seiner geometrischen Form Biegemomente in den Deckel einleitet.

Zudem ist aus der EP 1 238 841 A2 ein Deckel für ein Schiebedach bekannt, dass ein Verstärkungsteil mit einem U-förmigen Querschnitt aufweist.

Ferner ist aus der DE 41 08 195 C1 ein Schiebedach mit einem Führungselement bekannt, das an einem Verstärkungselement vorgesehen ist.

Die Aufgabe der Erfindung besteht darin, einen Deckel für ein Schiebedachsystem zu schaffen, der sich durch eine hohe Steifigkeit, geringe Biegebelastungen sowie einen geringen Bauraum in vertikaler Richtung auszeichnet.

Zur Lösung dieser Aufgabe ist erfindungsgemäß ein Deckel für ein Schiebedachsystem vorgesehen, mit mindestens einem im Querschnitt U-förmigen Verstärkungselement, das mit seinem Mittelschenkel so am Deckel angebracht ist, dass sich die beiden Seitenschenkel vom Deckel weg erstrecken, wobei das Verstärkungselement an einer Führungsschiene vorgesehen ist, die ein Bodenteil aufweist, mit dem sie am Verstärkungselement angebracht ist. Das U-förmige Verstärkungselement führt zu einer deutlichen Erhöhung der Steifigkeit des Deckels, ohne dass hierfür ein großer Bauraum in vertikaler Richtung erforderlich wäre.

Das Verstärkungselement kann mit dem Deckel verklebt und/oder in ein Schäumteil eingebettet sein, das am Deckel angebracht ist. Auf diese Weise lässt sich die nötige mechanische Verbindung mit geringem Aufwand erzielen.

Vorzugsweise ist das Verstärkungselement eine Profilschiene. Eine solche Schiene ist zu geringen Kosten verfügbar.

Gemäß einer Ausführungsform ist vorgesehen, dass die Führungsschiene in das Verstärkungselement integriert ist. Auf diese Weise kann die Anzahl der nötigen Einzelteile verringert werden. Außerdem entfällt der Aufwand für die Montage der Führungsschiene am Verstärkungselement. Die Führungsschiene kann beispielsweise durch geeignet geformte und ausgerichtete Führungsstege gebildet sind, die einstückig an die Seitenschenkel des Verstärkungselements angesetzt sind.

Gemäß einer alternativen Ausführungsform ist vorgesehen, dass die Führungsschiene zwei abgekröpfte Führungsstege aufweist. Dies ermöglicht, die Führungsschiene im Innenraum des Verstärkungselements anzuordnen, was zu einem kompakten Aufbau führt.

Dabei ist es vorteilhaft, wenn sich die abgekröpften Führungsstege in entgegengesetzten Richtungen erstrecken. Dies ermöglicht, einen Gleiter des Ausstellmechanismus ohne zusätzlichen Aufwand in Querrichtung auf der Führungsschiene zu führen. Zusammen mit einem vorzugsweise symmetrischen Querschnitt führt dazu, dass von der Führungsschiene keine Biegemomente in den Deckel eingeleitet werden.

Die Führungsschiene kann mit dem Verstärkungselement auf verschiedene Weise verbunden sein, beispielsweise stoffschlüssig, insbesondere verklebt, verschweißt oder verlötet, oder auch mechanisch, insbesondere verschraubt, verclincht oder vertoxt.

Zur Lösung der oben genannten Aufgabe ist auch ein Schiebedachsystem mit einem Deckel, einem Verstärkungselement und einer Führungsschiene vorgesehen, wobei das Schiebedachsystem einen Ausstellmechanismus aufweist, der einen ausstellbaren Gleiter enthält, wobei der Gleiter verschiebbar auf der Führungsschiene angeordnet ist. Die ineinandergeschachtelte Anordnung von Führungsschiene und Verstärkungselement führt zum einen zu geringen Biegebelastungen im Deckel und zum anderen zu einem sehr kompakten Aufbau in vertikaler Richtung.

Die Erfindung wird nachfolgend anhand einer Ausführungsform beschrieben, die in den beigefügten Zeichnungen dargestellt ist. In diesen zeigen:
- Figur 1 schematisch ein Kraftfahrzeug mit Schiebedachsystem;
- Figur 2 schematisch einen Schnitt entlang der Ebene II-II von Figur 1; und
- Figur 3 schematisch einen Schnitt entlang der Ebene III-III von Figur 1, wobei sich der Deckel in einer teilweise ausgestellten Stellung befindet.

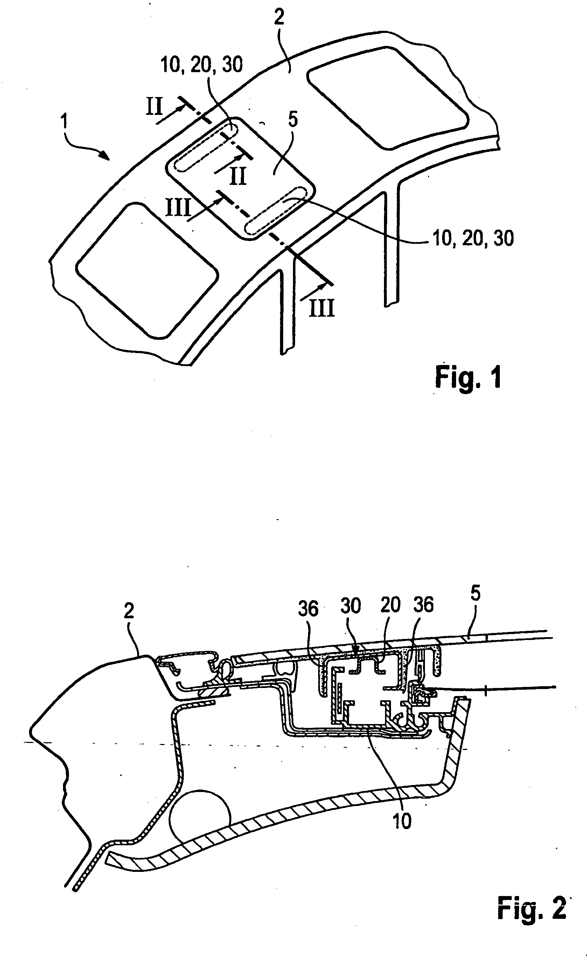

In Figur 1 ist schematisch ein Kraftfahrzeug 1 mit einem Fahrzeugdach 2 gezeigt, das mit einem Schiebedachsystem versehen ist. Von diesem ist in Figur 1 insbesondere ein Deckel 5 zu sehen, der von einem Ausstellmechanismus aus der in Figur 1 gezeigten, geschlossenen Stellung nach hinten verstellt werden kann, sodass eine Dachöffnung im Dach 2 mehr oder weniger freigegeben wird. Der Deckel 5 kann aus Kunststoff oder aus Glas bestehen.

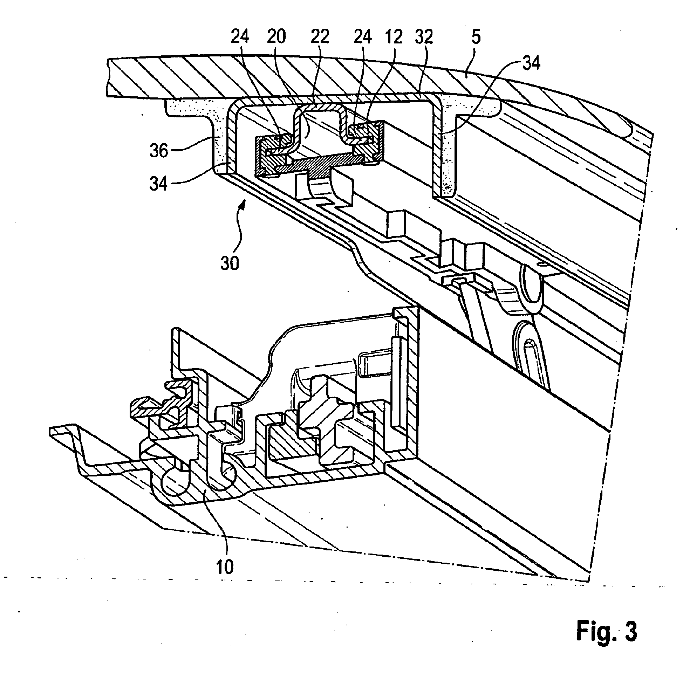

Der Ausstellmechanismus enthält zwei Dachschienen 10, die sich in Längsrichtung entlang der Seitenholme des Fahrzeugdachs erstrecken. In den Dachschienen 10 sind verschiedene Bauteile aufgenommen, mit denen der Deckel 5 in die geschlossene bzw. in verschiedene geöffnete Stellungen gebracht werden kann. Teil des Ausstellmechanismus ist auch ein Gleiter 12 (siehe Figur 3), der an einer Führungsschiene 20 verschiebbar angreift. Die Führungsschiene 20 besteht vorzugsweise aus Metall und weist einen im Wesentlichen symmetrischen Querschnitt mit einem Bodenteil 22 und zwei abgekröpften Führungsstegen 24 auf. Die Führungsstege erstrecken sich ausgehend vom Bodenteil in zueinander entgegengesetzten Richtungen.

Der Gleiter 12 umgreift die Führungsstege auf deren Außenseite, sodass der Gleiter senkrecht zur Verschieberichtung zuverlässig an der Führungsschiene gehalten ist.

Die Führungsschiene 20 ist im Inneren eines U-förmigen Verstärkungselements 30 angeordnet, das ebenfalls vorzugsweise aus Metall besteht und als Profilteil ausgeführt ist. Das Verstärkungselement 30 enthält einen Mittelschenkel 32, der dem Deckel zugewandt und an diesem angebracht ist, sowie zwei Seitenschenkel 34. Am Deckel 5 ist das Verstärkungselement 30 durch Verkleben und/oder Einschäumen angebracht (siehe einen in den Figuren 2 und 3 angedeuteten PU-Schaum 36).

Der Begriff "U-förmig" bezeichnet hier nur die grundsätzliche Form, die vom Mittelschenkel und den Seitenschenkeln definiert ist. An den Seitenschenkeln können weitere Stege etc. vorgesehen sein (siehe auch Figur 2 einen am rechten Seitenschenkel angeordneten Zusatzsteg), in die gemäß einer nicht dargestellten Ausführungsform u.U. auch die Funktion der Führungsschiene integriert sein kann.

Zum Verbinden der Führungsschiene 20 mit dem Verstärkungselement 30 kann das Bodenteil 22 der Führungsschiene 20 mit dem Mittelschenkel 32 des Verstärkungselements 30 verklebt, verschweißt oder verlötet sein. Es ist auch möglich, die beiden Teile mechanisch miteinander zu verbinden, insbesondere miteinander zu verschrauben, zu verclinchen oder zu vertoxen.

Mit der Führungsschiene 20, die im Inneren des Querschnitts des Verstärkungselements 30 angeordnet ist, ergibt sich ein sehr kompakter Aufbau, der sich zusätzlich dadurch auszeichnet, dass keine Biegemomente vom Gleiter 12 in den Deckel 5 eingeleitet werden. Weiterhin ergibt sich ein in vertikaler Richtung sehr kompakter Aufbau, sodass eine große Kopffreiheit im Inneren des Fahrzeugs gewährleistet ist.

Obwohl in den Figuren 2 und 3 jeweils nur ein Verstärkungselement mit einer Führungsschiene zu senen ist, versteht sind, dass entsprechend den Dachschienen 10 der Deckel 5 mit zwei Verstärkungselementen 30 und zwei Führungsschienen 20 versehen, die sich in Längsrichtung in der Nähe der Längsränder des Deckels 5 erstrecken (siehe auch Figur 1).)

## Patentansprüche

1. Deckel (5) für ein Schiebedachsystem, mit mindestens einem im Querschnitt U-förmigen Verstärkungselement (30), das mit seinem Mittelschenkel (32) so am Deckel (5) angebracht ist, dass sich die beiden Seitenschenkel (34) vom Deckel (5) weg erstrecken, **dadurch gekennzeichnet, dass** am Verstärkungselement (30) eine Führungsschiene (20) vorgesehen ist, wobei die Führungsschiene (20) ein Bodenteil (22) aufweist, mit dem sie am Verstärkungselement (30) angebracht ist.

2. Deckel nach Anspruch 1, **dadurch gekennzeichnet, dass** das Verstärkungselement (30) mit dem Deckel verklebt ist.

3. Deckel nach Anspruch 1 oder Anspruch 2, **dadurch gekennzeichnet, dass** das Verstärkungselement (30) in ein Schäumteil (36) eingebettet ist, das am Deckel (5) angebracht ist.

4. Deckel nach Anspruch 3, **dadurch gekennzeichnet, dass** das Schäumteil (36) ein Rahmen ist.

5. Deckel nach einem der vorhergehenden Ansprüche, **dadurch gekennzeichnet, dass** das Verstärkungselement (30) eine Profilschiene ist.

6. Deckel nach einem der vorhergehenden Ansprüche, **dadurch gekennzeichnet, dass** die Führungsschiene (20) in das Verstärkungselement integriert ist.

7. Deckel nach einem der vorhergehenden Ansprüche, **dadurch gekennzeichnet, dass** die Führungsschiene (20) zwei abgekröpfte Führungsstege (24) aufweist.

8. Deckel nach Anspruch 7, **dadurch gekennzeichnet, dass** sich die abgekröpften Führungsstege (24) in entgegengesetzten Richtungen erstrecken.

9. Deckel nach einem der Ansprüche 7 und 8, **dadurch gekennzeichnet, dass** die Führungsschiene (20) mit dem Verstärkungselement (30) stoffschlüssig verbunden ist, insbesondere verklebt, verschweißt oder verlötet ist.

10. Deckel nach einem der Ansprüche 7 und 8, **dadurch gekennzeichnet, dass** die Führungsschiene (20) mit dem Verstärkungselement (30) mechanisch verbunden ist, insbesondere verschraubt, verclincht oder vertoxt.

11. Deckel nach einem der vorhergehenden Ansprüche, **dadurch gekennzeichnet, dass** der Deckel (5) aus Glas besteht.

12. Deckel nach einem Ansprüche 1 bis 10, **dadurch gekennzeichnet, dass** der Deckel (5) aus Kunststoff besteht.

13. Schiebedachsystem mit einem Deckel nach einem der Ansprüche 1 bis 10, **dadurch gekennzeichnet, dass** es einen Ausstellmechanismus aufweist, der einen ausstellbaren Gleiter (12) enthält, wobei der Gleiter (12) verschiebbar auf der Führungsschiene (20) angeordnet ist.

## Claims

1. A cover (5) for a sliding roof system, comprising at least one reinforcing element (30) which has a U-shaped cross-section and has its center leg (32) attached to the cover (5) such that the two side legs (34) extend away from the cover (5), **characterized in that** a guide rail (20) is provided on the reinforcing element (30), the guide rail (20) including a base part (22) by which it is attached to the reinforcing element (30).

2. The cover according to claim 1, **characterized in that** the reinforcing element (30) is glued to the cover.

3. The cover according to claim 1 or claim 2, **characterized in that** the reinforcing element (30) is embedded in a foamed part (36) which is attached to the cover (5).

4. The cover according to claim 3, **characterized in that** the foamed part (36) is a frame.

5. The cover according to any of the preceding claims, **characterized in that** the reinforcing element (30) is a profiled rail.

6. The cover according to any of the preceding claims, **characterized in that** the guide rail (20) is integrated in the reinforcing element.

7. The cover according to any of the preceding claims, **characterized in that** the guide rail (20) includes two cranked guide webs (24).

8. The cover according to claim 7, **characterized in that** the cranked guide webs (24) extend in opposite directions.

9. The cover according to either of claims 7 and 8, **characterized in that** the guide rail (20) is connected to the reinforcing element (30) by means of a material-to-material connection, in particular glued, welded or soldered.

10. The cover according to either of claims 7 and 8, **characterized in that** the guide rail (20) is mechanically connected to the reinforcing element (30), in particular by means of a screw, clinch or tox connection.

11. The cover according to any of the preceding claims, **characterized in that** the cover (5) is made of glass.

12. The cover according to any of claims 1 to 10, **characterized in that** the cover (5) is made of plastic.

13. A sliding roof system comprising a cover according to any of claims 1 to 10, **characterized in that** it includes a tilting mechanism having a fold-out sliding piece (12), the sliding piece (12) being shiftably arranged on the guide rail (20).

## Revendications

1. Couvercle (5) pour un système de toit coulissant, comportant au moins un élément de renforcement (30) de section transversale en forme de U, ayant une branche centrale (32) montée sur le couvercle (5) de telle sorte que les deux branches latérales (34) s'étendent en partant du couvercle (5), **caractérisé en ce qu'**un rail de guidage (20) est prévu sur l'élément de renforcement (30), le rail de guidage (20) présentant une partie de fond (22) par laquelle il est monté sur l'élément de renforcement (30).

2. Couvercle selon la revendication 1, **caractérisé en ce que** l'élément de renforcement (30) est collé sur le couvercle.

3. Couvercle selon la revendication 1 ou la revendication 2, **caractérisé en ce que** l'élément de renforcement (30) est noyé dans un élément moussé (36) qui est monté sur le couvercle (5).

4. Couvercle selon la revendication 3, **caractérisé en ce que** l'élément moussé (36) est un cadre.

5. Couvercle selon l'une des revendications précédentes, **caractérisé en ce que** l'élément de renforcement (30) est un rail profilé.

6. Couvercle selon l'une des revendications précédentes, **caractérisé en ce que** le rail de guidage (20) est intégré dans l'élément de renforcement.

7. Couvercle selon l'une des revendications précédentes, **caractérisé en ce que** le rail de guidage (20) comprend deux barrettes de guidage (24) coudées.

8. Couvercle selon la revendication 7, **caractérisé en ce que** les barrettes de guidage (24) coudées s'étendent dans des directions opposées.

9. Couvercle selon l'une des revendications 7 et 8, **caractérisé en ce que** le rail de guidage (20) est relié à l'élément de renforcement (30) par coopération de matière, en particulier par collage, par soudage ou par brasage.

10. Couvercle selon l'une des revendications 7 et 8, **caractérisé en ce que** le rail de guidage (20) est relié à l'élément de renforcement (30) par voie mécanique, en particulier par vissage, par clinchage ou par toxage.

11. Couvercle selon l'une des revendications précédentes, **caractérisé en ce que** le couvercle (5) est constitué en verre.

12. Couvercle selon l'une des revendications 1 à 10, **caractérisé en ce que** le couvercle (5) est constitué en matière plastique.

13. Système de toit coulissant comportant un couvercle selon l'une des revendications 1 à 10, **caractérisé en ce qu'**il comprend un mécanisme de déploiement qui comprend un coulisseau (12) déployable, le coulisseau (12) étant agencé de façon mobile en translation sur le rail de guidage (20).
